# EUROPEAN PATENT APPLICATION

(11) **EP 4 800 562 A1**
(43) Date of publication of application: **02.09.2026**
(21) Application number: 25181969.4
(22) Date of filing: 11.06.2025
(51) Int. Cl.: G06F 11/3698, G06F 11/273, G06F 11/3668, G06F 9/445

(54) **DYNAMIC TEST ENVIRONMENT CONFIGURATION METHOD AND SYSTEM THEREOF**

(30) Priority: 27.02.2025 CN 202510224301
(71) Applicant: Getac Technology Corporation, New Taipei City 221009 (TW)
(72) Inventor: LEE, Jiunn-Jye, 11568 Taipei City (TW); CHANG, Jui-Yu, 11568 Taipei City (TW); HSIEH, Yuan-Ning, 11568 Taipei City (TW)
(74) Representative: Viering, Jentschura & Partner mbB Patent- und Rechtsanwälte

(57) **Abstract**

The dynamic test environment configuration method, comprising: in response to an update command, reading update information deployed according to the update command; encoding a content of the update information to generate an encrypted image; releasing the encrypted image to a device under test; decoding the encrypted image by the device under test to obtain the content of the update information; and configuring a test environment of the device under test according to the content of the update information to execute a test process.

## Description

### BACKGROUND

### Field of Invention

The present invention relates to a configuration method and system, and more particularly to a dynamic test environment configuration method and system thereof.

### Description of Related Art

Typically, because devices are used in different areas with different product specifications, when using a cloud website to test a device under test, it is necessary to connect this device under test to a corresponding cloud website to test the device under test, so that the device under test complies with the regional product specification after testing. Therefore, before testing the device under test, the tester must first confirm the area where the device under test will be used, and then use the corresponding application version installed in the device under test to connect to the corresponding cloud website, so as to test the product specification of the device under test.

However, in order to meet the requirements of different regional product specifications, different application versions with different connection settings are needed to connect to different cloud websites to test the product specification of the device under test. Even for the same application version, it is necessary to synchronize the settings according to the operating system configured on the device under test, as well as the different test environments corresponding to the update content of different product specifications. As a result, when a problem occurs on a device under test, testers can only diagnose the source of the issue based on the model of the device under test, and install a corresponding application version in the device under test to connect to the cloud website and to manually adjust the test environment to test the device under test, which is not only prone to errors but may also pollute the settings of the cloud website.

Therefore, one of the major endeavors pursued by testers is how to efficiently configure accurate test environments to test the device under test.

### SUMMARY

The foregoing presents a simplified summary of the disclosure in order to provide a basic understanding to the reader. This summary is not an extensive overview of the disclosure and it does not identify key/critical elements of the present disclosure or delineate the scope of the present disclosure.

One embodiment of the present invention is to provide a dynamic test environment configuration method, comprising: in response to an update command, reading update information deployed according to the update command; encoding a content of the update information to generate an encrypted image; releasing the encrypted image to a device under test; decoding the encrypted image by the device under test to obtain the content of the update information; and configuring a test environment of the device under test according to the content of the update information to execute a test process.

In some embodiments, the dynamic test environment configuration method further includes executing a continuous deployment process or a continuous integration process in response to the update command to store the update information deployed according to the update command.

In some embodiments, encoding the content of the update information to generate the encrypted image further includes: setting a test script; and encoding the content of the update information and the test script to generate the encrypted image.

In some embodiments, decoding the encrypted image by the device under test to obtain the content of the update information further includes: initializing the device under test to obtain a decryption key; and decoding the encrypted image according to the decryption key to obtain the content of the update information.

In some embodiments, the encrypted image is a two-dimensional barcode.

In some embodiments, the update information includes website information, operating system information of a device under test, and application programs information of a device under test.

In some embodiments, configuring a test environment of the device under test according to the content of the update information further includes: updating an operating system of the device under test and application programs of the device under test according to the operating system information and the application programs information.

In some embodiments, the dynamic test environment configuration method further includes connecting the updated device under test to a website according to the website information to execute the test process.

Another embodiment of the present invention is to provide a dynamic test environment configuration method, comprising: using a configuration device to encode a content of update information deployed according to an update command to generate an encrypted image; executing an initialization setting service process by a device under test to obtain a decryption key; decoding the encrypted image by the device under test according to the decryption key to obtain the content of the update information; and configuring a test environment by the device under test according to the content of the update information to execute a test process.

In some embodiments, the dynamic test environment configuration method further includes executing a continuous deployment process or a continuous integration process by an update server in response to the update command to store the update information deployed according to the update command.

In some embodiments, the dynamic test environment configuration method further includes: setting a test script through the configuration device; and encoding the content of the update information and the test script by the configuration device to generate the encrypted image.

In some embodiments, the encrypted image is a two-dimensional barcode.

In some embodiments, the dynamic test environment configuration method further includes releasing the encrypted image to the device under test via the configuration device.

Another embodiment of the present invention is to provide a dynamic test environment configuration system, comprising: a device under test; and a test environment configuration device coupled to the device under test, the test environment configuration device further comprising: a storage device storing at least one instruction; and a processor coupled to the storage device for accessing the at least one instruction to execute: in response to an update command, reading update information deployed according to the update command; encoding a content of the update information to generate an encrypted image; releasing the encrypted image to the device under test. The device under test decodes the encrypted image to obtain the content of the update information, and configures a test environment according to the content of the update information to execute a test process.

In some embodiments, the processor is further configured to access the at least one instruction to execute a continuous deployment process or a continuous integration process to store update information deployed according to the update command.

In some embodiments, the device under test further performs an initialization process to obtain a decryption key. The device under test decodes the encrypted image according to the decryption key to obtain the content of the update information.

In some embodiments, the encrypted image is a two-dimensional barcode.

In some embodiments, the dynamic test environment configuration system further includes an update server. The update server executes a continuous deployment process or a continuous integration process in response to the update command to store the update information deployed according to the update command.

In the present invention, the update information of the test environment is dynamically recorded, and the update information is encoded into an encrypted image. The tester can decode the corresponding encrypted image according to the device under test, and use the obtained content of the update information to dynamically configure the corresponding test environment of the device under test. Then, the device under test can be tested using the test environment. Since the present invention does not require the tester to set up the test environment for the device under test by himself, the present invention can avoid errors caused by the tester manually adjusting the test environment, and can also avoid the instability of the cloud website caused by manual adjustment errors.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of dynamic test environment configuration system according to a preferred embodiment of the present invention.
FIG. 2 is a flow chart of a dynamic test environment configuration method according to a preferred embodiment of the present invention.
FIG. 3 is a flow chart of generating update information according to a preferred embodiment of the present invention.
FIG. 4 is a flow chart illustrated an initialization setting service process of the device under test according to a preferred embodiment of the present invention.

### DESCRIPTION OF THE EMBODIMENTS

To make the contents of the present disclosure more thorough and complete, the following illustrative description is given with regard to the implementation aspects and embodiments of the present disclosure, which is not intended to limit the scope of the present disclosure. The features of the embodiments and the steps of the method and their sequences that constitute and implement the embodiments are described. However, other embodiments may be used to achieve the same or equivalent functions and step sequences.

Unless otherwise defined herein, scientific and technical terminologies employed in the present disclosure shall have the meanings that are commonly understood and used by one of ordinary skill in the art. Unless otherwise required by context, it will be understood that singular terms shall include plural forms of the same and plural terms shall include the singular. Specifically, as used herein and in the claims, the singular forms "a" and "an" include the plural reference unless the context clearly indicates otherwise.

Typically, when using cloud websites to test a device under test, it is necessary to connect this device under test to the corresponding cloud website to test the device under test, so that the device under test complies with the regional product specification after testing. However, as devices are updated and test environments become increasingly complex, configuring a correct test environment becomes a challenge for testers. Therefore, the present invention dynamically records the update information of the test environment and encodes the content of the update information into an encrypted image. Then, the tester can decode the corresponding encrypted image according to the device under test and dynamically configure the test environment for the device under test according to the decoded update information. Because the present invention does not require the tester to manual adjust the test environment for the device under test, the mistake due to tester manual adjustment, which affect the stability of the cloud website, can be avoided.

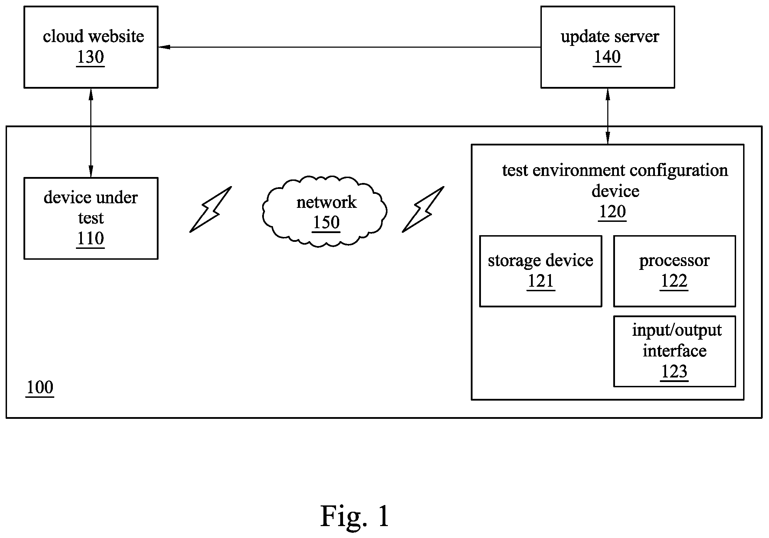

FIG. 1 is a schematic diagram of dynamic test environment configuration system according to a preferred embodiment of the present invention. The dynamic test environment configuration system 100 includes a device under test 110 and a test environment configuration device 120. The device under test 110 and the test environment configuration device 120 are connected via a network 150. The test environment configuration device 120 is used to dynamically configure the test environment of the device under test 110 when the device under test 110 is coupled to the cloud website 130 to test. In some embodiments, the device under test 110 is a product produced by a company and intended to be deployed in an area for use. When the device under test 110 is connected to the cloud website 130 to test, because each usage area has specific product specifications and the connected cloud website 130 also has different settings. Therefore, before testing, the test environment configuration device 120 dynamically provides the test environment configuration information to the device under test 110 according to area that the device under test 110 will be used and the setting of the connected cloud website 130, so as to configure the test environment when connecting to the cloud website 130 to test the device under test 110.

In some embodiments, the test environment configuration device 120 includes a storage device 121 and a processor 122. The storage device 121 and the processor 122 may communicate with each other via, for example, but not limited to, a bus. The storage device 121 is any storage device that can be used to store data, and can be, for example, but not limited to, a random access memory (RAM), a read only memory (ROM), a flash memory, a hard disk, or other storage devices that can be used to store data. The storage device 121 is configured to store at least a plurality of computer readable instructions. The processor 122 is electrically coupled to the storage device 121 and is configured to access computer-readable instructions from the storage device 121 to execute the function of configuring the test environment.

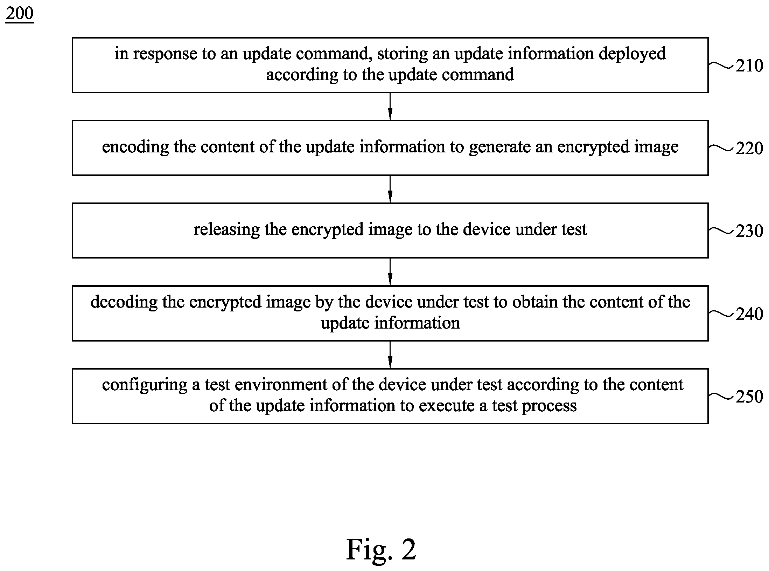

FIG. 2 is a flow chart of a dynamic test environment configuration method according to a preferred embodiment of the present invention. The dynamic test environment configuration method 200 can be applied to the test environment configuration device 120 in FIG. 1 to dynamically set up a test environment for the device under test 110 according to area that the device under test 110 will be used and the cloud website 130 that the device under test 110 will be connected. It is not necessary for the tester to manually set up the test environment. Therefore, a lot of time may be saved and errors caused by human negligence may be avoided. It should be understood that the operations of the dynamic test environment configuration method 200 mentioned in this embodiment, except for those whose order is specifically stated, can be adjusted in any sequence according to actual needs, and can even be executed simultaneously or partially simultaneously. Furthermore, in different embodiments, these operations may be adaptively increased, replaced, and/or omitted.

Please refer to Fig. 1 and Fig. 2. The dynamic test environment configuration method 200 responds to an update command to store update information deployed according to the update command in step 210. In some embodiments, when a cloud website 130 is used to test the device under test 110, in order to normally connect to the cloud website 130 for testing, the device under test 110 must be configured accordingly to match the settings of the cloud website 130. Therefore, in order to correctly configure the device under test 110, when an update server 140 issues an update command to update the cloud website 130 and the device under test 110, the present invention utilizes the continuous deployment (CD) process or the continuous integration (CI) process of the software automation system executed by the update server 140 to record the update information deployed according to the update command and store the update information in the update server 140. In some embodiments, the recorded update information is a text file, which mainly records but is not limited to the update information of the cloud website 130, the update information of the device under test 110, and the update information of the installed application programs. The update information of the cloud website 130 includes but is not limited to the website connection method, the website connection account password, the user authority and the connection device authority. The update information of the device under test 110 includes but is not limited to the version of the operating system installed in the device under test and the settings of the device under test. The update information of the installed application programs includes but is not limited to the versions of application programs and the settings of the application programs. In some embodiments, the update server 140 is set up by a company that produces the device under test 110. In other embodiments, the update server 140 is set up by a third-party company to provide test service.

In step 220, the content of the update information is encoded to generate an encrypted image. In some embodiments, the processor 122 of the test environment configuration device 120 may connect to the update server 140, download the update information stored in the update server 140, and store the update information in the storage device 121. The processor 122 may capture the update information from the storage device 121, and encode, compress, and encrypt the update information to convert it into an encrypted image. In some embodiments, the encrypted image is a two-dimensional barcode, but the present invention is not limited thereto.

In step 230, the encrypted image is released to the device under test. In some embodiments, the generated encrypted image may be directly deployed in a cloud server, such as the update server 140, by the test environment configuration device 120. The tester of the device under test 110 can download the encrypted image for use. In other embodiments, the generated encrypted image may also be directly transmitted to the tester of the device under test 110 via email or instant messaging software by the test environment configuration device 120.

In step 240, the encrypted image is decoded by the device under test to obtain the content of the update information. In some embodiments, after the tester of the device under test 110 obtains the encrypted image, the tester may use the decryption key of the device under test 110 to decrypt the encrypted image to obtain the content of the update information. In some embodiments, the device under test 110 has an image capture element for scanning the encrypted image obtained by the tester and using the decryption key to decode the encrypted image to obtain the content of the update information.

In step 250, a test environment of the device under test is configured according to the content of the update information to execute a test process. In some implementations, the test environment of the device under test is configured according to the content of the update information. For example, if the existing version of the operating system installed in the device under test 110 does not match the version of the operating system described in the update information, the device under test 110 downloads the version of the operating system described in the update information to update the existing version of the operating system. If the content of the update information includes update settings of the device under test, the device under test 110 performs the update settings to update the settings of the device under test. If the settings or versions of the application programs currently installed on the device under test 110 do not match the settings or versions of the application programs described in the update information, the device under test 110 downloads the settings or versions of the application programs described in the update information to update the application programs currently installed on the device under test 110. If the content of the update information includes a test script, the test script is executed to test the device under test 110 after the update setting of the device under test 110 is completed. It should be noted that the above-mentioned updating method of the test environment of the device under test is only one embodiment and is not intended to limit the present application. After the device under test 110 is updated and a corresponding test environment is configured for the connected cloud website 130, the device under test 110 can be connected to the cloud website 130 to test.

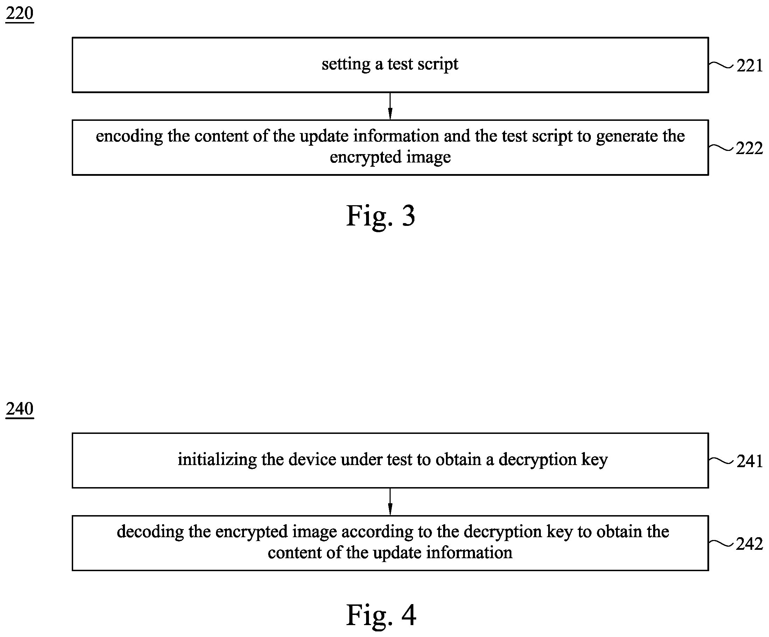

In some embodiments, when the content of the update information is encoded to generate an encrypted image in step 220, the administrator who issues the update command through the update server 140 can also add or delete the update information at this time. That is, the content of the update information is not limited to the update information recorded by the update server 140 when executing the continuous deployment process or the continuous integration process of the software automation system. The administrator can add additional test scripts or other environment settings to the update information. It should be noted that in other embodiments, the administrator may also delete part of the update information recorded in the continuous deployment process or the continuous integration process. The flowchart for adding additional test scripts and generating corresponding update information is shown in FIG. 3.

FIG. 3 is a flow chart showing the generation of update information according to other embodiment of the present invention. Please refer to FIG. 1 and FIG. 3 at the same time. In step 221, a test script is set. In some embodiments, the administrator may configure a test script to test the hardware device of the device under test 110 when the device under test 110 executes a test. In some embodiments, the test environment configuration device 120 further includes an input/output interface 123. The administrator can add test scripts or other environment settings through the input/output interface 123.

In step 222, the content of the update information and the test script are encoded together to generate the encrypted image. In some embodiments, the processor 122 may encode the test scripts and other environment settings added by the administrator together with the update information into an encrypted image. Accordingly, when the encrypted image is decoded by the device under test 110, the decoded update information not only includes the update information recorded by the continuous deployment process or the continuous integration process, but also includes the test scripts and other environment settings added by the administrator. Therefore, the device under test 110 can execute the test process accordingly. It should be noted that in other embodiments, the administrator may also delete part of the update information recorded in the continuous deployment process or the continuous integration process.

In some embodiments, in order to prevent the previous settings of the device under test 110 from confusing or destroying the decoded update information, before the device under test 110 obtaining the decryption key to decode the encrypted image, the device under test 110 must execute an initialization setting service process to remove the previous settings and restore the system to the original settings and restart. In some embodiments, the decryption key is built in the initialization setting service process. Therefore, if the device under test 110 does not execute the initialization setting service process, the device under test 110 will not obtain the decryption key built in the initialization setting service process to decode the encrypted image. By using such method, it is possible to avoid the previous settings of the device under test 110 from confusing or destroying the decoded update information. Then, in step 240, the device under test 110 may use the decryption key to decode the encrypted image to obtain the update information content. The initialization setting service process is illustrated in FIG. 4.

FIG. 4 is a flow chart illustrated an initialization setting service process of the device under test according to a preferred embodiment of the present invention. First, in step 241, the device under test is initialized by performing an initialization setting service process to obtain a decryption key. In some embodiments, the decryption key is built in the initialization setting service process of the device under test 110. A tester of the device under test 110 or the processor 122 of the test environment configuration device 120 can send an initialization instruction to control the device under test 110 to perform the initialization setting service process to remove the previous settings, restore the system to the original factory settings and restart the system of the device under test 110 to obtain the decryption key.

In step 242, the encrypted image is decoded according to the decryption key to obtain the content of the update information. In some embodiments, after the device under test 110 is restarted to obtain the decryption key, the encrypted image can be decoded using the decryption key of the device under test 110 to obtain the content of the update information.

Accordingly, in the present application, the update information of the test environment is dynamically recorded and the update information is encoded into an encrypted image. The tester can decode the corresponding encrypted image according to the device under test, and use the obtained content of the update information to dynamically configure the test environment for the device under test. Then, the device under test can be tested using the test environment. Since the present invention does not require the tester to set up the test environment for the device under test by himself, the present invention can avoid errors caused by the tester manually adjusting the test environment, and can also avoid the instability of the cloud website caused by manual adjustment errors.

## Claims

1. A dynamic test environment configuration method (200), **characterized by** comprising:
in response to an update command, reading update information deployed according to the update command (210);
encoding a content of the update information to generate an encrypted image(220);
releasing the encrypted image to a device under test (230);
decoding the encrypted image by the device under test to obtain the content of the update information (240); and
configuring a test environment of the device under test according to the content of the update information to execute a test process (250).

2. The dynamic test environment configuration method (200) as claimed in claim 1, **characterized by** further comprising:
executing a continuous deployment process or a continuous integration process in response to the update command to store the update information deployed according to the update command.

3. The dynamic test environment configuration method (200) as claimed in claim 1 or claim 2, wherein encoding the content of the update information to generate the encrypted image (220), **characterized by** further comprises:
setting a test script (221); and
encoding the content of the update information and the test script to generate the encrypted image (222).

4. The dynamic test environment configuration method (200) as claimed in any one of claim 1 to claim 3, wherein decoding the encrypted image by the device under test to obtain the content of the update information (240), **characterized by** further comprises:
initializing the device under test to obtain a decryption key; and
decoding the encrypted image according to the decryption key to obtain the content of the update information.

5. The dynamic test environment configuration method (200) as claimed in any one of claim 1 to claim 4, **characterized in that** the encrypted image is a two-dimensional barcode.

6. The dynamic test environment configuration method (200) as claimed in any one of claim 1 to claim 5, **characterized in that** the update information comprises website information, operating system information of the device under test, and application programs information of the device under test.

7. The dynamic test environment configuration method (200) as claimed in claim 6, wherein configuring the test environment of the device under test according to the content of the update information (250), **characterized by** further comprises:
updating an operating system of the device under test and application programs of the device under test according to the operating system information and the application programs information.

8. The dynamic test environment configuration method (200) as claimed in any one of claim 1 to claim 7, **characterized by** further comprising: connecting the device under test to a website according to the website information to execute the test process.

9. A dynamic test environment configuration method (200), **characterized by** comprising:
using a configuration device to encode a content of update information deployed according to an update command to generate an encrypted image (220);
executing an initialization setting service process by a device under test to obtain a decryption key (241);
decoding the encrypted image by the device under test according to the decryption key to obtain the content of the update information (242); and
configuring a test environment by the device under test according to the content of the update information to execute a test process (250).

10. The dynamic test environment configuration method (200) as claimed in claim 9, **characterized by** further comprising:
executing a continuous deployment process or a continuous integration process by an update server in response to the update command to store the update information deployed according to the update command.

11. The dynamic test environment configuration method (200) as claimed in claim 9 or claim 10, **characterized by** further comprising:
setting a test script through the configuration device (221); and
encoding the content of the update information and the test script by the configuration device to generate the encrypted image (222).

12. A dynamic test environment configuration system (100), **characterized by** comprising:
a device under test (110); and
a test environment configuration device (120) coupled to the device under test(110), the test environment configuration device (120) comprising:
a storage device (121) storing at least one instruction; and
a processor (122) coupled to the storage device (121) for accessing the at least one instruction to execute:
in response to an update command, storing update information deployed according to the update command (210);
encoding a content of the update information to generate an encrypted image( 220); and
releasing the encrypted image to the device under test (230),
wherein the device under test (110) decodes the encrypted image to obtain the content of the update information, and configures a test environment according to the content of the update information to execute a test process.

13. The dynamic test environment configuration system (100) as claimed in claim 12, **characterized in that** the device under test (110) further performs an initialization process to obtain a decryption key, and the device under test (110) decodes the encrypted image according to the decryption key to obtain the content of the update information.

14. The dynamic test environment configuration system (100) as claimed in claim 12 or claim 13, **characterized in that** the encrypted image is a two-dimensional barcode.

15. The dynamic test environment configuration system (100) as claimed in any one of claim 12 to claim 14, **characterized by** further comprising an update server (140), wherein the update server (140) executes a continuous deployment process or a continuous integration process in response to the update command to store the update information deployed according to the update command.
